(19) Europäisches Patentamt
European Patent Office
Office européen des brevets

(11) **EP 1 810 988 A1**

(12) **EUROPEAN PATENT APPLICATION**
published in accordance with Art. 158(3) EPC

(43) Date of publication:
**25.07.2007 Bulletin 2007/30**

(51) Int Cl.:
*C08G 69/26* (2006.01)   *B29C 55/02* (2006.01)
*B32B 27/34* (2006.01)   *C08J 5/18* (2006.01)
*B29K 77/00* (2006.01)

(21) Application number: **05800414.4**

(22) Date of filing: **07.11.2005**

(86) International application number:
**PCT/JP2005/020378**

(87) International publication number:
**WO 2006/049281 (11.05.2006 Gazette 2006/19)**

(84) Designated Contracting States:
**DE FI FR GB IT**

(30) Priority: **08.11.2004 JP 2004323071**

(71) Applicant: **MITSUBISHI GAS CHEMICAL COMPANY, INC.**
**Chiyoda-ku,**
**Tokyo 100-8324 (JP)**

(72) Inventor: **NANBA, H.,**
**Hiratsuka Research Lab. Mitsubishi Gas**
**Hiratsuka-shi, Kanagawa 2540016 (JP)**

(74) Representative: **Gille Hrabal Struck Neidlein Prop Roos**
**Patentanwälte**
**Brucknerstrasse 20**
**40593 Düsseldorf (DE)**

(54) **STRETCHED AROMATIC-POLYAMIDE FILM**

(57)   The present invention provides a stretched aromatic-polyamide film obtained by stretching aromatic-polyamide resin by a stretch ratio exceeding 4 times in a MD direction and/or a TD direction. The aromatic-polyamide resin includes a diamine constitutional unit containing 70 mol% or more of m-xylylenediamine unit and a dicarboxylic acid constitutional unit containing 80 to 97 mol% of $C_{4-20}$ linear aliphatic $\alpha,\omega$-dicarboxylic acid unit and 3 to 20 mol% of isophthalic acid unit. The aromatic-polyamide resin has a minimum semi-crystallization time of 40 to 2,000 seconds in a measuring temperature range from the glass transition point thereof to less than the melting point thereof when measured by isothermal crystallization according to depolarization intensity method. The stretched aromatic-polyamide film has excellent gas-barrier properties and transparency.

**Description**

TECHNICAL FIELD

The present invention relates to a stretched aromatic-polyamide film having gas-barrier properties.

BACKGROUND OF THE INVENTION

Used as a packaging material having gas-barrier properties is a multilayer film in which a resin having gas-barrier properties, such as polyvinylidene chloride (PVDC), ethylene-vinyl alcohol copolymer (EVOH), polyamide, etc., is utilized for a gas-barrier layer. Among polyamides, polymetaxylylene adipamide (hereinafter referred to as "Nylon MXD6") obtained by the polycondensation of m-xylylenediamine with adipic acid exhibits less reduction in gas-barrier properties and rapidly recovers the gas-barrier properties when subjected to boiling or retorting processes, compared with other resins having gas-barrier properties. Recently, such polyamides are increasingly used in the packaging field due to these properties. For example, the use, as packaging films, of multilayer biaxial stretched films comprising a layer in which, for example, polyolefines that have been graft-modified with unsaturated carboxylic acids are mixed with aromatic polyamides, such as Nylon MXD6, and the like has been proposed (Patent Document 1).

Although films comprising Nylon MXD6 have excellent gas-barrier properties, such films are disadvantageous in that impact resistance and plasticity are low when they are not stretched. In addition, the films are disadvantageously whitened by absorbing moisture or heating. It is already known that the impact resistance and plasticity of films can be improved to some extent when they are stretched. It is also known that films are prevented from whitening when they are stretched. However, when the stretch ratio of Nylon MXD6 exceeds 4 times either in the Machine Direction (MD) or the Transverse Direction (TD), the filmbreaks or the transparency and gas-barrier properties are lowered, which makes it impossible to obtain a film having excellent gas-barrier properties and transparency.

In contrast, stretched polypropylene films are produced by being stretched by 5 to 10 times in the MD/TD directions. In order to impart gas-barrier properties to polypropylene, investigations are being conducted in which various resins having gas-barrier properties are laminated on polypropylene to form a multilayer. However, when a multilayer comprising polypropylene and Nylon MXD6 is formed, the Nylon MXD6 film breaks or the transparency and gas-barrier properties are lowered at the stretching temperature and with the stretch ratio suitable for polypropylene. This makes it impossible to obtain a film having excellent gas-barrier properties and transparency.
Patent Document 1: Japanese Patent No. 3021854

DISCLOSURE OF THE INVENTION

PROBLEM TO BE SOLVED BY THE INVENTION

The present invention aims to provide stretched aromatic-polyamide films excellent in gas-barrier properties and transparency.

The present inventors conducted extensive research on improving the stretch ratio of Nylon MXD6-based films, and found that aromatic polyamide resin in which isophthalic acid is copolymerized and the semi-crystallization time is controlled in a specific range can be stretched with high stretch ratio without breaking, while securing the transparency and gas-barrier properties at a practical level. The present invention has been accomplished based on these findings.

That is, according to the present invetion, there is provided a stretched aromatic-polyamide film, which is produced by stretching an aromatic-polyamide resin by a stretch ratio exceeding 4 times in a MD direction and/or a TD direction, in which the aromatic-polyamide resin includes a diamine constitutional unit containing 70 mol% or more of m-xylylenediamine unit and a dicarboxylic acid constitutional unit containing 80 to 97 mol% of $C_{4-20}$ linear aliphatic $\alpha,\omega$-dicarboxylic acid unit and 3 to 20 mol% of isophthalic acid unit, and the aromatic-polyamide resin has a minimum semi-crystallization time of 40 to 2,000 seconds in a measuring temperature range from a glass transition point thereof to less than a melting point thereof when measured by isothermal crystallization according to depolarization intensity method.

BEST MODE FOR CARRYING OUT THE INVENTION

Aromatic polyamide resins used in the present invention comprise a diamine constitutional unit containing 70 mol% or more (up to and including 100 mol%) of m-xylylenediamine unit and a dicarboxylic acid constitutional unit containing 80 to 97 mol% of $C_{4-20}$ linear aliphatic $\alpha,\omega$-dicarboxylic acid unit ($\alpha,\omega$-dicarboxylic acid unit) and 3 to 20 mol% of isophthalic acid unit. The content of the m-xylylenediamine unit in the diamine constitutional unit is preferably 80 mol% or more (up to and including 100 mol%) and more preferably 90 mol% or more (up to and including 100 mol%). The

content of the $\alpha,\omega$-dicarboxylic acid unit in the dicarboxylic acid constitutional unit is preferably 85 to 97 mol% and more preferably 85 to 95 mol%. The content of the isophthalic acid is preferably 3 to 15 mol% and more preferably 5 to 15 mol%. The ratio of the diamine constitutional unit to the dicarboxylic acid constitutional unit is preferably 0.99 to 1.01 (molar ratio).

The above-described aromatic-polyamide resins are produced by melt polycondensation. For example, a nylon salt of m-xylylenediamine, adipic acid, and isophthalic acid is heated under pressure in the presence of water, thereby allowing the polymerization to proceed in a molten state while removing water added and polycondensation water. Alternatively, atmospheric polycondensation may be employed, where m-xylylenediamine is directly added, for example, to a molten mixture of adipic acid and isophthalic acid. In order to prevent the reaction system from solidifying, the atmospheric polycondensation is preferably conducted by continuously adding m-xylylenediamine and heating the reaction system so as to keep the reaction temperature at or above the melting points of the oligoamide and polyamide being produced.

The aromatic-polyamide resin (melt-polycondensation polyamide resin) obtained by melt polycondensation having a relatively low molecular weight usually has a relative viscosity of 1.8 to 2.28. If the relative viscosity of the melt-polycondensed polyamide resin falls within the above range, a high-quality aromatic-polyamide resin showing a good color tone with little gel-like formation can be obtained. However, the low viscosity in turn causes drawbacks; for example, a draw down or gradual thickening of the aromatic-polyamide resin at the edges of sheets may occur when the aromatic-polyamide resin is formed into single-layer films and sheets; multilayer films, sheets, and bottles; and the like, and the thickness of the aromatic-polyamide resin layer may become uneven when producing bottle preforms, thereby making it difficult to produce films, sheets, and multilayer structures having uniform thickness. To eliminate those drawbacks, the melt-polymerization polyamide resin is further subjected to solid-phase polymerization, as required. The melt-polymerization polyamide resin is pelletized or powdered, and then subjected to solid-phase polymerization at 150°C to the melting point of the polyamide resin by heating under reduced pressure or in an inert gas atmosphere. If a multilayer sheet, film or stretch blown bottle shape is intended, the relative viscosity of the aromatic-polyamide resin obtained by solid-phase polymerization (solid-phase polymerized polyamide resin) is preferably 2.3 to 4.2 and more preferably 2.4 to 3.8. When the relative viscosity falls within the above range, the resultant multilayer structure is substantially free from drawbacks such as draw-down and gradual thickening of the aromatic-polyamide resin layer at the edges of films or sheets.

In this specification, relative viscosity refers to a ratio of the dropping time (t), which is determined by using a Canon Fenske viscometer at 25°C to measure a solution in which 1 g of resin is dissolved in 100 mL of 96% sulfuric acid, to the dropping time (to) of the 96% sulfuric acid itself measured in the same manner. Relative viscosity is determined by the following formula:

$$\texttt{Relative Viscosity = (t)/(t_0)}$$

Diamine component for producing aromatic-polyamide resin comprises 70 mol% or more (up to and including 100 mol%), preferably 80 mol% or more (up to and including 100 mol%), and more preferably 90 mol% or more (up to and including 100 mol%) of m-xylylenediamine.

The diamine component may contain a diamine other than m-xylylenediamine. Examples of other diamines include aliphatic diamines, such as tetramethylenediamine, pentamethylenediamine, 2-methylpentadiamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines, such as 1,3-bis(aminomethyl)cyclahexane, 1,4-bis(aminomethyl)cyclohaxane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; aromatic-ring containing diamines, such as bis(4-aminophenyl)ether, p-phenylenediamine, p-xylylenediamine, and bis(aminomethyl)naphthalene, but are not limited thereto.

The dicarboxylic acid component for producing aromatic-polyamide resin comprises 80 to 97 mol%, preferably 85 to 97 mol%, and more preferably 85 to 95 mol% of a $C_{4-20}$ linear aliphatic $\alpha,\omega$-dicarboxylic acid ($\alpha,\omega$-dicarboxylic acid) and 3 to 20 mol%, preferably 3 to 15mol%, and more preferably 5 to 15 mol% of isophthalic acid. Examples of the $\alpha,\omega$-dicarboxylic acid include adipic acid, pimelic acid, suberic acid, azelaic acid, sebacic acid, undecanedioic acid, and dodecandioic acid, with adipic acid being preferred.

When the dicarboxylic acid constitutional unit in the aromatic-polyamide resin contains 3 to 20 mol% of isophthalic acid, the melting point of the resultant aromatic-polyamide resin is lowered to enable molding at lower temperatures as compared with the sole use of $\alpha,\omega$-dicarboxylic acid, thereby improving the moldability and fabricability when the resin is stretched. In addition, since the crystallization rate of the polyamide resin is reduced, the resin can be stretched with a stretch ratio of more than 4. If the isophthalic acid content is less than 3 mol%, it is impossible to improve the stretch ratio by reducing the crystallization rate while maintaining good gas-barrier properties. In contrast, if the isophthalic acid content exceeds 20 mol%, the melting point is excessively lowered and the crystallization rate is considerably reduced. Therefore, although moldability and fabricability are improved, the glass transition point is lowered by water absorption due to low crystallinity, and thus the aromatic-polyamide resin layer is softened during a hot water treatment, which is likely to cause deformation of single-layer films and multilayer structures and also cause elution of a part of the polyamide resin layer. Thus, the use of isophthalic acid exceeding 20 mol% is not preferable. In addition, if the crystallinity is excessively reduced by the use of isophthalic acid exceeding 20 mol%, the strength and toughness of single-layer films and multilayer structures will be lowered, and thus such use is not preferable.

The dicarboxylic acid constitutional unit may contain a dicarboxylic acid other than $\alpha,\omega$-dicarboxylic acid and isophthalic acid insofar as the effects of the present invention are not adversely affected. Specific examples of such dicarboxylic acid include terephthalic acid, and 2, 6-naphthalene dicarboxylic acid, but are not limited thereto. The aromatic-polyamide resin may contain a small amount of a unit derived from monoamine and monocarboxylic acid to be used as a molecular weight modifier.

The aromatic-polyamide resin used in the present invention is a crystallizable polymer. The crystallinity is represented by a specific minimum semi-crystallization time. More specifically, the minimum semi-crystallization time is 40 to 2,000 seconds, preferably 40 to 1,000 seconds in a measuring temperature range from the glass transition point of the aromatic-polyamide resin to not greater than the melting point thereof when measured by isothermal crystallization using depolarization intensity method. The deformation or shrinkage of the single-layer film and multilayer structure during hot water treatment is prevented by using polyamide resin having such crystallinity. By controlling the minimum semi-crystallization time to 40 seconds or longer, whitening due to crystallization and the forming defects during the stretching of the resin are prevented. If the minimum semi-crystallization time exceeds 2,000 seconds, namely, if the semi-crystallization time exceeds 2,000 seconds throughout the measuring temperature range, fabricability is improved but crystallinity is excessively reduced, which is likely to cause deformation of the single-layer film and multilayer structure due to a softening of the aromatic-polyamide resin layer during hot water treatment. Thus, this is not preferable. In addition, if the crystallinity is excessively reduced, the strength and toughness of the single-layer film and multilayer structure are lowered, which is not preferable.

The depolarization intensity method used herein is a method of measuring the degree of crystallization of resins. It utilizes the phenomenon of the birefringence of light passing through resins due to crystallization. When an amorphous or molten resin is crystallized between one pair of orthogonally disposed polarizing plates, the quantity of light transmitted through the polarizing plates varies in proportion to the degree of crystallization. The amount of transmitted light (intensity of transmitted light) is determined using a light-receiving element. Isothermal crystallization is a method of isothermally crystallizing an amorphous or molten resin at an arbitrary temperature within the range extending from its glass transition point to below its melting point. The semi-crystallization time is the time required until the intensity of the transmitted light reaches $(I\infty-I_0)/2$ ($I_0$ denotes the intensity of the transmitted light when the resin is amorphous or melted, and $I\infty$ denotes the intensity of the transmitted light when it reaches a constant value), namely the time required until half of the resin is crystallized, and is used as the index of the crystallization rate. Depolarization intensity method can be carried out according to the method described in Kobunshi Kagaku, Vol. 29, No. 323, pp. 139-143, (March 1972) or Kobunshi Kagaku, Vol. 29, No. 325, pp. 336-341, (May 1972).

The melting point of the aromatic-polyamide resin used in the present invention is preferably within the range of 180 to 235°C, and more preferably within the range of 180 to 220°C. The melting point of the aromatic-polyamide resin is lower than that of Nylon MXD6, and thus the resin can be extruded at lower temperatures than Nylon MXD6, thereby increasing the stretch ratio. In addition, since the melting point of the aromatic-polyamide resin is close to those of other thermoplastic resins, the generation of offensive odors and discoloration due to the degradation of resins while fabricating multilayer structures can be decreased. The glass transition point of the aromatic-polyamide resin is preferably within the range of 85 to 110°C, and more preferably within the range of 85 to 100°C.

The stretched aromatic-polyamide film of the present invention has an oxygen gas transmission coefficient of 0.01 to 0.15 cc·mm/m$^2$·day·atm when measured at 23°C and 60% relative humidity. When the oxygen gas transmission coefficient exceeds 0.15 cc·mm/m$^2$·day·atm, it is necessary to increase the thickness of a polyamide resin layer in order to achieve barrier properties required in practical use, which often results in poor stretching.

In order to improve the plasticity and impact resistance of the stretched aromatic-polyamide film, aliphatic polyamides, such as Nylon 6, Nylon 66, and Nylon 6-66, etc., may be added to an aromatic-polyamide resin as required. Other thermoplastic resins may be added to the aromatic-polyamide resin as long as the effects of the present invention are not adversely affected; and as required, an antistatic agent, lubricant, antiblocking agent, stabilizer, dye, pigment, etc., may be added to the aromatic-polyamide resin. Arbitrary forms of resin can be added to the aromatic-polyamide resin by a dry blend, or melt kneading using a monoaxial or biaxial extruder.

The stretched aromatic-polyamide film can be obtained by stretching, by a stretch ratio exceeding 4 times in the MD direction and/or TD direction, a single-layer non-stretched film obtained by film-forming methods, such as the usual T-die method, cylindrical die method (inflation molding), or the like.

A non-stretched film is preferably obtained by melt-extruding aromatic-polyamide resin preferably at 250 to 290°C, and more preferably 250 to 270°C. High extrusion temperatures cause decomposition, gelling, coloring, and foaming.

The non-stretched film can be stretched by a uniaxial-stretching method, simultaneous biaxial-stretching method, or serial biaxial-stretching method. The film is stretched preferably at 90 to 160°C and more preferably at 110 to 150°C. Low stretching temperatures often cause poor stretching, and high stretching temperatures often cause poor stretching and whitening. The thickness of the stretched aromatic-polyamide film is preferably 5 to 40 $\mu$m. When a thinner stretched film is intended, the film may break upon stretching or the transparency of the film may be lowered. When a thicker stretched film is intended, the film may not be evenly stretched and the thickness may become uneven.

When only Nylon MXD6 is used, the film may break or the transparency and gas-barrier properties may be lowered when stretched by a stretch ratio exceeding 4 times in the MD direction and/or TD direction. With respect to the aromatic-polyamide resin used in the present invention, isophthalic acid is copolymerized therein and the minimum semi-crystallization time is within a specific range. Therefore, even when the film is stretched by a stretch ratio exceeding 4 times, it does not suffer from breaking and the transparency and gas-barrier properties are not degraded. The stretch ratio (linear magnification) is preferably 4.1 to 10, more preferably 4.5 to 10, and yet more preferably 5.1 to 9.

Aromatic-polyamide resin may be combined with another thermoplastic resin to form a multilayer structure. For example, aromatic-polyamide resin may be combined with aliphatic polyamide, thereby providing a multilayer structure with improved impact resistance and plasticity. Such a multilayer structure can be manufactured by a laminating method or multilayer stretching method described below.

A multilayer structure may be produced by such a laminating method that a thermoplastic resin film is laminated on the stretched aromatic-polyamide film of the present invention. Adhesives may be used for this lamination. The thermoplastic resin film may be laminated on both sides of the stretched aromatic-polyamide film. Examples of the thermoplastic resin include low density polyethylene, high density polyethylene, linear low density polyethylene, polypropylene, polybutene, copolymers thereof, ionomer resin, ethylene-acrylate copolymer, ethylene-vinylacetate copolymer, modified polyolefin resin, etc., and these can be used alone or as a mixture. The thermoplastic resin film may be a single-layer film or a multilayer film and may be a stretched film or a non-stretched film. Usable adhesives include maleic anhydride graft-denatured materials of ethylene-vinylacetate copolymer, high density polyethylene, low density polyethylene, linear low density polyethylene, and polypropylene, or a composition comprising thereof as a main component.

A multilayer structure may be produced by a multilayer stretching method such that a multilayer non-stretched film is obtained by separately melting and extruding an aromatic-polyamide resin, an adhesive resin, and a thermoplastic resin, then the obtained multilayer non-stretched film is stretched by a stretch ratio exceeding 4 times in the MD direction and/or TD direction. The multilayer non-stretched film can be obtained by film-forming methods, such as the co-extrusion T-die method, co-extrusion cylindrical die method (inflation molding), or the like in the same manner as in the production of single-layer stretched films. This multilayer non-stretched film is subjected to uniaxial stretching, simultaneous biaxial-stretching, or serial biaxial-stretching under the same stretching conditions (stretching temperature, stretch ratio, etc.) as in the production of single-layer stretched film, thereby providing a multilayer structure containing the stretched aromatic-polyamide film of the present invention.

Usable thermoplastic resins for the multilayer stretching method include low density polyethylene, high density polyethylene, linear low density polyethylene, polypropylene, polybutene, copolymers thereof, ionomer resin, ethylene-acrylate copolymer, ethylene-vinylacetate copolymer, modified polyolefin resin, etc., and these can be used alone or as a mixture. Usable adhesive resins include maleic anhydride graft-denatured materials of ethylene-vinylacetate copolymer, high density polyethylene, low density polyethylene, linear low density polyethylene, and polypropylene, or a composition comprising thereof as a main component.

In the multilayer structure, a stretched aromatic-polyamide film functions as a gas-barrier layer. The multilayer structure simply needs to contain at least one stretched aromatic-polyamide film of the present invention, and the laminated layer structure is not limited. Preferable are a three-layer film having three kinds of layers in which a gas-barrier layer (A), an adhesive layer (B), and a thermoplastic resin layer (C) are laminated in this order, and a five-layer film having three kinds of layers in which the layers are arranged in the order of (C) / (B) / (A) / (B) / (C). Alternatively, the layers can be arranged in the order of (A) / (B) / (A) / (B) / (C).

The stretched aromatic-polyamide film and multilayer structure exhibit less reduction in gas-barrier properties and rapidly recovers the gas-barrier properties when subjected to boiling or retorting processes. Therefore, the stretched aromatic-polyamide film and multilayer structure can be used as packaging materials for foodstuffs, such as processed meats, boiled foodstuffs, retort pouch foods, etc., and various other packaging materials. Packaging materials can be sealed by heat sealing or tightly closed with metal such as a clip, or the like. There is no limitation on the sealing method.

EXAMPLES

The present invention will be described in more detail below with reference to the following examples. However, those examples are not limiting the scope of the present invention thereto. In the examples and comparative examples, measurements and evaluations were conducted by the following methods.

(1) Haze

Measured according to ASTM D-1003 using a color difference/turbidity measuring apparatus (type: COH-300A) available from Nippon Denshoku Industries Co., Ltd.

(2) Oxygen Transmission Coefficient

Measured according to ASTM D3985 at 23°C and 60% relative humidity using an oxygen transmission rate analyzer (type: OX-TRAN 10/50A) available from Modern Controls Co., Ltd.

(3) Minimum Semi-Crystallization Time

Measured according to depolarization intensity method using a crystallization rate measuring apparatus (type: MK701) available from Kotaki Seisakusho Co., Ltd., in the following conditions:

Sample melting temperature: 260°C
Sample melting time: 3 minutes
Crystallization bath temperature (measuring temperature): 160°C.

The minimum semi-crystallization time was determined by measuring the semi-crystallization time while changing the measuring temperature in the range extending from the glass transition point of the polyamide resin to less than the melting point thereof.

(4) Melting Point and Glass Transition Point

Measured using a flow velocity differential scanning calorimeter "DSC-50" available from Shimadzu Corporation, in the following conditions:

Control: $\alpha$-alumina
Sampling amount: 10 mg
Rate of temperature rise: 10°C/min
Measuring temperature range: 25 to 300°C
Atmosphere: Nitrogen gas 30 ml/min.

Reference Example 1 (Production of Polyamide 1)

A jacketed reactor equipped with a stirrer, a partial condenser, a cooler, a thermometer, a dropping tank, and a nitrogen gas inlet was charged with adipic acid and isophthalic acid (molar ratio of 96:4). After the reactor was fully purged with nitrogen, the temperature was raised to 170°C under nitrogen flow to fluidize the dicarboxylic acids, to which m-xylylenediamine was then added dropwise under stirring. During the addition, the inner temperature was continuously raised to 245°C, and water produced upon the dropwise addition of m-xylylenediamine was removed from the reaction system through the partial condenser and the cooler.
After dropping m-xylylenediamine (the total amount of m-xylylenediamine dropped: 0.994 times mol of dicarboxylic acid component), the inner temperature was steadily raised to 255°C, at which point the reaction was continued for 15 min. Thereafter, the inner pressure of the reaction system was steadily reduced to 600 mmHg for 10 min, and then the reaction was continued for a further 40 min while steadily raising the reaction temperature to 260°C.
After the reaction was complete, the inner pressure of the reactor was raised to 0.2 MPa by nitrogen gas to discharge the resultant polymer in the form of a strand through a nozzle at a lower portion of the polymerization tank. The strand was water-cooled and cut into polyamide resin pellets. The obtained polyamide resin had a relative viscosity of 2.1 and a melting point of 234°C.
A stainless rotary drum heater charged with the pellets was rotated at 5 rpm. The rotary drum heater was fully purged with nitrogen, and the reaction system was heated from room temperature to 140°C under a low nitrogen flow. When the temperature of the reaction system reached 140°C, the pressure of the reaction system was reduced to 1 torr or lower, followed by raising the temperature of the reaction system to 180°C for 110 min. Solid-phase polymerization was continued while maintaining the same temperature for 180 min. After the reaction was complete, the reaction system was returned to atmospheric pressure, and the temperature was reduced under a nitrogen flow to 60°C, at which point the pellets were taken out of the heater.

The solid-phasepolymerizedpolyamide resin (polyamide 1) thus obtained had a relative viscosity of 2.5, melting point of 234°C, glass transition point of 91°C, and minimum semi-crystallization time of 47 seconds. The diamine constitutional unit was composed of 100 mol% of m-xylylenediamine unit, and the dicarboxylic acid constitutional unit was composed of 96 mol% of adipic acid unit and 4 mol% of isophthalic acid unit. The ratio of the diamine constitutional unit to the dicarboxylic acid constitutional unit was 0.994 (molar ratio).

Reference Example 2 (Production of Polyamide 2)

A solid-phase polymerized polyamide resin was produced in the same manner as in Reference Example 1 except that the dicarboxylic acid component was composed of 94 mol% of adipic acid and 6 mol% of isophthalic acid. The obtained polymerized polyamide resin (polyamide 2) had a relative viscosity of 2.5, melting point of 232°C, glass transition point of 92°C, and minimum semi-crystallization time of 62 seconds. The diamine constitutional unit was composed of 100% of m-xylylenediamine unit, and the dicarboxylic acid constitutional unit was composed of 94 mol% of adipic acid unit and 6 mol% of isophthalic acid unit. The ratio of the diamine constitutional unit to the dicarboxylic acid constitutional unit was 0.994 (molar ratio).

Example 1

Polyamide 1 was extruded using an extruder having a cylinder diameter of 20 mm (available from Toyo Seiki Seisaku-Sho, Ltd., "Labo Plastomill") at 250 to 260°C, and non-stretched films were produced using the T-die cooling roll method. The non-stretched films were produced while varying the thickness in such a manner that the film thicknesses after stretched with different stretch ratios were almost the same. Each non-stretched film was stretched by a stretch ratio of 4.5, 5, or 6 in the MD direction at the stretching temperature of 130°C using a biaxial-stretching machine available from Toyo Seiki Seisaku-sho, Ltd. (tenter method), providing single-layer stretched films. Table 1 shows the transparency (haze) and oxygen transmission coefficient of the obtained single-layer stretched films.

Example 2

Single-layer stretched films were produced in the same manner as in Example 1 except that polyamide 2 was used instead of polyamide 1. Table 2 shows the transparency (haze) and oxygen transmission coefficient of the obtained single-layer stretched films.

Example 3

Polypropylene (layer C, available from Japan Polypropylene Corporation; trade name: novatech PP FL6CK, which may be abbreviated as PP) was extruded at 200 to 210°C from an extruder having a cylinder diameter of 45 mm, an adhesive resin (layer B, available from Mitsubishi Chemical corporation; trade name: MODIC P513V, which may be abbreviated as Tie) was extruded at 190 to 200°C from an extruder having a cylinder diameter of 40 mm, and polyamide 1 (gas-barrier layer A) was extruded at 250 to 260°C from an extruder having a cylinder diameter of 30 mm. The extrudate was passed, while molten, through a feed block to form a molten multilayer film in which the layers were arranged in the order of C/B/A. Multilayer non-stretched films were produced using the T-die cooling roll method. The multilayer non-stretched films were produced while varying the thickness in such a manner that the film thicknesses after stretched with different stretch ratios were almost the same. Each multilayer non-stretched film was stretched with a stretch ratio of 5, 6, or 8 in the MD direction at the stretching temperature of 150°C using a roller-type monoaxial stretching machine. The resultant films were subjected to heat-setting, providingmultilayer stretchedfilms. Table 3 shows the laminated layer structure, thickness, transparency (haze), and oxygen transmission coefficient of the obtained multilayer stretched films.

Comparative Example 1

Single-layer stretched films were produced in the same manner as in Example 1 except that Nylon MXD6 (available from Mitsubishi Gas Chemical Company Inc. ; trade name: MX Nylon 6007) was used instead of polyamide 1. Tables 1 and 2 show the transparency (haze) and oxygen transmission coefficient of the obtained single-layer stretched films.

Comparative Example 2

Multilayer stretched films were produced in the same manner as in Example 3 except that Nylon MXD6 (available from Mitsubishi Gas Chemical Company Inc.; trade name: MX Nylon 6007) was used as gas-barrier layer A. Table 3 shows the laminated layer structure, thickness, transparency (haze), and oxygen transmission coefficient of the obtained multilayer stretched films.

Table 1

|  | Example 1 | | | Comparative example 1 | |
|---|---|---|---|---|---|
| Copolymerization ratio (molar ratio) | | | | | |
| Adipic acid | | 96 | | | 100 |
| Isophthalic acid | | 4 | | | 0 |
| Polyamide resin | | | | | |
| Minimum semi-crystallization time (second) | | 47 | | | 25 |
| Melting point (°C) | | 234 | | | 240 |
| Glass transition point (°C) | | 91 | | | 85 |
| Stretched film | | | | | |
| Stretching temperature (°C) | | 130 | | | 130 |
| Stretch ratio in the MD direction | 4.5 | 5 | 6 | 4.5 | 5 |
| Non-stretched film thickness ($\mu$m) | 68 | 83 | 85 | 70 | 95 |
| Break upon stretching | None | None | None | None | Break |
| Stretched film thickness ($\mu$m) | 15 | 16 | 14 | 15 | - |
| Evaluation results of stretched film | | | | | |
| Haze (%) | 1.5 | 1.0 | 1.5 | 15.0 | - |
| Oxygen transmission coefficient (cc·mm/m$^2$·day·atm) | 0.053 | 0.048 | 0.043 | 0.180 | - |

Table 2

|  | Example 2 | | | Comparative example 1 | |
|---|---|---|---|---|---|
| Copolymerization ratio (molar ratio) | | | | | |
| Adipic acid | | 94 | | | 100 |
| Isophthalic acid | | 6 | | | 0 |
| Polyamide resin | | | | | |
| Minimum semi-crystallization time (second) | | 62 | | | 25 |
| Melting point (°C) | | 232 | | | 240 |
| Glass transition point (°C) | | 92 | | | 85 |
| Stretched film | | | | | |
| Stretching temperature (°C) | | 130 | | | 130 |
| Stretch ratio in the MD direction | 4.5 | 5 | 6 | 4.5 | 5 |
| Non-stretched film thickness ($\mu$m) | 65 | 80 | 92 | 70 | 95 |
| Break upon stretching | None | None | None | None | Break |
| Stretched film thickness ($\mu$m) | 14 | 16 | 15 | 15 | - |
| Evaluation results of stretched film | | | | | |
| Haze (%) | 1.0 | 1.3 | 1.2 | 15.0 | |

(continued)

| Evaluation results of stretched film | | | | | |
|---|---|---|---|---|---|
| Oxygen transmission coefficient (cc·mm/m$^2$·day·atm) | 0.050 | 0.048 | 0.050 | 0.180 | - |

Table 3

| | Example 3 | | | Comparative example 2 | |
|---|---|---|---|---|---|
| Copolymerization ratio (molar ratio) | | | | | |
| Adipic acid | | 96 | | | 100 |
| Isophthalic acid | | 4 | | | 0 |
| Polyamide resin | | | | | |
| Minimum semi-crystallization time (second) | | 47 | | | 25 |
| Melting point (°C) | | 234 | | | 240 |
| Glass transition point (°C) | | 91 | | | 85 |
| Stretched film | | | | | |
| Stretching temperature (°C) | | 150 | | | 150 |
| Stretch ratio in the MD direction | 5 | 6 | 8 | 5 | 6 |
| Non-stretched film thickness (μm) | 355 | 420 | 553 | 380 | 430 |
| Break upon stretching | None | None | None | None | Break |
| Stretched film thickness (μm) | | | | | |
| PP | 50 | 52 | 51 | 55 | - |
| Tie | 6 | 5 | 4 | 5 | - |
| Barrier layer | 14 | 13 | 16 | 13 | - |
| Total thickness | 70 | 70 | 71 | 73 | |
| Evaluation results of stretched film | | | | | |
| Haze (%) | 6.5 | 7.0 | 6.8 | 16.0 | |
| Oxygen transmission coefficient (cc·mm/m$^2$·day·atm) | 0.050 | 0.049 | 0.050 | 0.176 | |

Industrial Applicability

Aromatic-polyamide in which isophthalic acid is copolymerized and which has a semi-crystallization time within a specific range can be stretched with high stretch ratios without breaking, and thus stretched aromatic-polyamide films excellent in transparency and gas-barrier properties can be effectively produced. The stretched aromatic-polyamide film of the present invention exhibits less reduction in gas-barrier properties and rapidly recovers the gas-barrier properties when subjected to boiling treatment or retorting processes. Therefore, the stretched aromatic-polyamide film of the present invention can be suitably used, as a single-layer structure or at least one layer forming a multilayer structure, for packaging materials for foodstuffs, pharmaceuticals, industrial chemicals, cosmetic materials, inks, and the like.

**Claims**

1. A stretched aromatic-polyamide film, which is produced by stretching an aromatic-polyamide resin by a stretch ratio exceeding 4 times in a MD direction and/or a TD direction,
   wherein:

   the aromatic-polyamide resin comprises a diamine constitutional unit containing 70 mol% or more of m-xylylenediamine unit and a dicarboxylic acid constitutional unit containing 80 to 97 mol% of $C_{4-20}$ linear aliphatic $\alpha,\omega$-dicarboxylic acid unit and 3 to 20 mol% of isophthalic acid unit; and
   the aromatic-polyamide resin has a minimum semi-crystallization time of 40 to 2,000 seconds in a measuring temperature range from a glass transition point thereof to less than a melting point thereof when measured by isothermal crystallization according to depolarization intensity method.

**2.** The stretched aromatic-polyamide film according to claim 1, wherein an oxygen transmission coefficient is 0.01 to 0.15 cc·mm/m$^2$·day·atm when measured at 23°C and 60% relative humidity.

**3.** The stretched aromatic-polyamide film according to claim 1 or 2, wherein a melting point of the aromatic-polyamide resin is 180 to 235°C.

**4.** The stretched aromatic-polyamide film according to any one of claims 1 to 3, wherein a glass transition point of the aromatic-polyamide resin is 85 to 110°C.

**5.** The stretched aromatic-polyamide film according to any one of claims 1 to 4, wherein the stretched aromatic-polyamide film forms at least one layer of a multilayer structure, and the multilayer structure is obtained by laminating at least one thermoplastic resin film on the stretched aromatic-polyamide film.

**6.** The stretched aromatic-polyamide film according to any one of claims 1 to 4, wherein the stretched aromatic-polyamide film forms at least one layer of a multilayer structure, the multilayer structure is obtained by stretching, by a stretch ratio exceeding 4 times in the MD direction and/or the TD direction, a non-stretched multilayer film comprising at least one layer of the arornatic-polyamide resin, at least one adhesive resin layer, and at least one thermoplastic resin layer.

# EP 1 810 988 A1

<div style="text-align:center">

**INTERNATIONAL SEARCH REPORT**

</div>

| | International application No. |
|---|---|
| | PCT/JP2005/020378 |

**A. CLASSIFICATION OF SUBJECT MATTER**
*C08G69/26*(2006.01), *B29C55/02*(2006.01), *B32B27/34*(2006.01), *C08J5/18* (2006.01), *B29K77/00*(2006.01)

According to International Patent Classification (IPC) or to both national classification and IPC

**B. FIELDS SEARCHED**

Minimum documentation searched (classification system followed by classification symbols)
C08G69/00-69/50

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2001/068363 A1 (CRYOVAC, INC.),<br>20 September, 2001 (20.09.01),<br>Claims 1 to 3; page 4, line 15 to page 5, line 20;<br>page 12, lines 22 to 27; page 19, line 5 to<br>page 20, line 17<br>& EP 1276609 A1    & US 2004/0009360<br>& AU 200152149 A    & HU 200300258 A<br>& NZ 521428 A | 1-6<br>1-6 |
| X<br>Y | US 6299984 B1 (Cryovac, Inc.),<br>09 October, 2001 (09.10.01),<br>Column 6, lines 59 to 67; column 9, line 39 to<br>column 10, line 32; Claims 1, 2, 6<br>& EP 0987103 A1    & CA 2282161 A | 1-6<br>1-6 |

☒   Further documents are listed in the continuation of Box C.     ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 January, 2006 (06.01.06) | Date of mailing of the international search report<br>17 January, 2006 (17.01.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/020378

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-160987 A (Mitsubishi Gas Chemical Co., Inc.), 10 June, 2004 (10.06.04), Claims 1 to 4; Par. Nos. [0009], [0018] & US 2004/0076781 & EP 1413429 A1 & AU 2003252855 A & CN 1508008 A | 1-6 |
| A | JP 52-136260 A (Toyobo Co., Ltd.), 14 November, 1977 (14.11.77), Claims 1 to 3; page 5, upper right column, lines 17 to 18; page 8, lower left column, line 10 to lower right column, line 12; Table 6 & JP 52-127977 A & JP 52-135352 A & JP 52-135353 A & JP 52-136259 A & JP 53-018669 A & JP 53-021272 A & US 4120928 A & GB 1552410 A & FR 2348805 A1 & DE 2716710 A | 1-6 |
| A | JP 2003-206401 A (Mitsubishi Gas Chemical Co., Inc.), 22 July, 2003 (22.07.03), Par. Nos. [0033] to [0036] (Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3021854 B

**Non-patent literature cited in the description**

- *Kobunshi Kagaku,* March 1972, vol. 29 (323), 139-143
- *Kobunshi Kagaku,* May 1972, vol. 29 (325), 336-341